Europäisches Patentamt

European Patent Office

Office européen des brevets

(19)

(11) **EP 0 838 928 B1**

(12) **EUROPEAN PATENT SPECIFICATION**

(45) Date of publication and mention
of the grant of the patent:
**21.06.2006 Bulletin 2006/25**

(51) Int Cl.:
**H04L 27/26** $^{(2006.01)}$

(21) Application number: **97203254.4**

(22) Date of filing: **18.10.1997**

(54) **Equalisation of multicarrier signals**

Entzerrung von Mehrträgersignalen

Egalisation de signaux multiporteurs

(84) Designated Contracting States:
**AT BE CH DE DK ES FI FR GB IE IT LI NL**

(30) Priority: **25.10.1996 IT TO960867**

(43) Date of publication of application:
**29.04.1998 Bulletin 1998/18**

(73) Proprietor: **RAI RADIOTELEVISIONE ITALIANA
(S.p.A.)**
**00195 Roma (IT)**

(72) Inventors:
• **Mignone, Vittoria**
**10048 Vinovo (Torino) (IT)**
• **Morello, Alberto**
**10136 Torino (IT)**

(74) Representative: **Spandonari, Carlo**
**Spandonari & Modiano s.r.l.**
**corso Duca degli Abruzzi 16**
**10129 Torino (IT)**

(56) References cited:
• **MIGNONE V ET AL: "CD3-OFDM: A NOVEL
DEMODULATION SCHEME FOR FIXED AND
MOBILE RECEIVERS" IEEE TRANSACTIONS ON
COMMUNICATIONS,US,IEEE INC. NEW YORK,
vol. 44, no. 9, 1 September 1996 (1996-09-01),
pages 1144-1151, XP000628336 ISSN: 0090-6778**
• **MIGNONE V ET AL: "CD3-OFDM: A NEW
CHANNEL ESTIMATION METHOD TO IMPROVE
THE SPECTRUM EFFICIENCY IN DIGITAL
TERRESTRIAL TELEVISION SYSTEMS"
INTERNATIONAL BROADCASTING
CONVENTION 1994, 14 September 1995
(1995-09-14), XP000617513**

**Description**

Background of the Invention

This invention is concerned with a new process and apparatus for receiving digital signals transmitted with C-OFDM (Coded Orthogonal Frequency-Division Multiplex) modulation. The invention is particularly, though not exclusively, intended for application in the reception of digital audio and video signals, and particularly of those signals that are transmitted according to the European standard ETS 300 744, *"Digital broadcasting system for television, sound and data services: Framing structure, channel coding and modulation for digital terrestrial television"* (denoted in the sequel, for simplicity, with the acronym DVB-T, Digital Video Broadcasting - Terrestrial).

An exposition of OFDM modulation can be found, for example, in S.B. Weinstein, P.M. Ebert, *Data Transmission by Frequency-Division Multiplexing using the Discrete Fourier Transform,* IEEE Transactions on Communications, COM-19(5), pp. 628-634, October 1971.

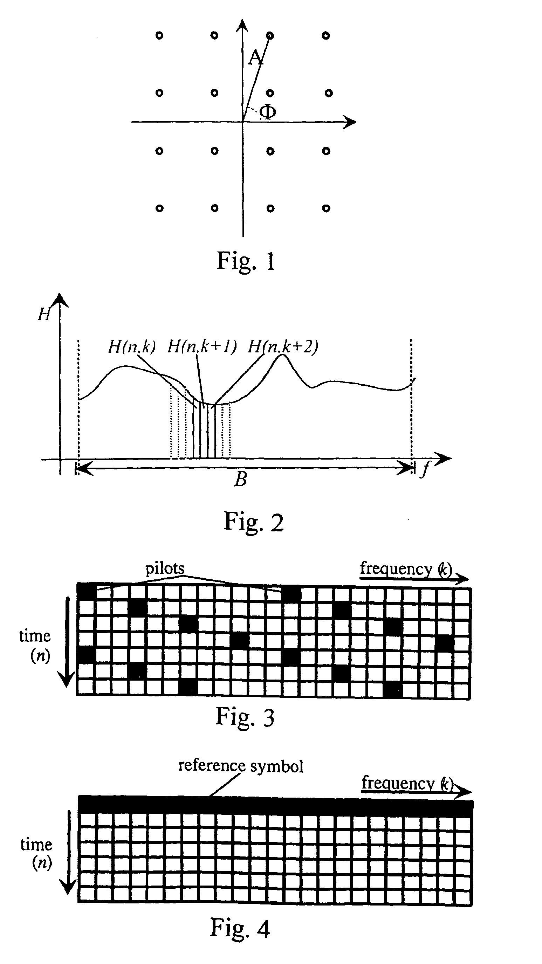

As well known, C-OFDM modulation involves the transmission of hundreds or thousands of narrow-band digital carriers that are frequency-multiplexed with a low bit-rate. These are amplitude- and phase-modulated so that their elementary components correspond to predetermined points in the amplitude-phase plane. The set of all points constitutes a "constellation". Typically, constellations of 4, 16 or 64 points are used, which are known as QPSK, 16-QAM, 64-QAM, respectively. A graphical representation of the 16-QAM constellation is shown in Figure 1, where I and Q are the in-phase and quadrature components of one carrier. The points shown are the 16 modulation states that are recognized as belonging to the constellation, corresponding to respective elementary components of the OFDM symbols (e.g., numbers 1 to 16, i.e., all the 16 possibile combinations of 4 bits). In practice, the thousands of bits comprising an OFDM symbol are divided in groups or elementary components of 4 bits, and each component is associated to a respective state in the constellation. With reference to Figure 1, signal $\underline{x}(n,k)$ (where the underlining denotes a complex vector), corresponding to an elementary component of the OFDM symbol, can therefore be represented with the formula:

$$\underline{x}(n,k) = A(n,k)\,e^{j\Phi(n,k)}$$

where $\Phi(n,k)$ is the phase information and $A(n,k)$ is the amplitude information, and $\underline{x}(n,k)$ belongs, for instance, to one of the constellations QPSK, 16-QAM, 64-QAM. Variable $n$ is a time-discrete variable indicating the OFDM symbol under consideration, and $k$ is a frequency-discrete variable corresponding to the index of the C-OFDM carrier to which it refers.

In order to generate the $n$-th OFDM symbol for transmission, the modulator performs the discrete inverse Fourier transform (IFFT) upon $N$ complex vectors $\underline{x}(n,k)$ ($k = 0, ..., N$-1), some of which are null in order to make the filtering process easy. Similarly, the demodulator performs the discrete Fourier transform (FFT) upon the received signal, in order to simultaneously demodulate the $N$ subcarriers constituting the signal. The sampling frequency $f_c$ of the signal in the time domain (which is often, for simplicity, normalized to 1) is such that $N$ samples are generated in the time of a useful OFDM symbol $T_u$, so that $T_u = N/f_c$, where N is the number of samples upon which the Fourier transform is performed.

In OFDM modulation, freedom from interference (i.e., orthogonality) among the carriers is insured by choosing a frequency gap among them which is equal to the useful signalling rate (symbol-rate) $1/T_u$. The symbol duration $T_u$ is quite high, because the total bit flow for a symbol is subdivided among the several, parallel-transmitted carriers, and therefore each individual carrier occupies a very restricted portion of the spectrum. This circumstance makes OFDM modulation very robust against fading (*frequency selective fading*), as produced by echoes on the terrestrial propagation channel. In the case of a linear, frequency selective channel, the channel frequency response $\underline{H}(f)$ for the $n$-th symbol may be approximated, in the neighborhoods of the individual OFDM carriers, with a succession of constant, and consequently non-distorting, stretches $\underline{H}(n,k)$:

$$\underline{H}(n,k) = H(n,k)e^{j\Theta}$$

In the diagram of Figure 2, the abscissa shows the frequency $f$ and the ordinate shows the absolute value, or amplitude $H(n,k)$, of the transfer function of a typical transmission channel. Frequency range $B$ is the overall bandwidth of the C-OFDM transmission.

In many cases, the $\underline{H}(n,k)$ values are substantially constant even as $n$ varies (i.e., for successive OFDM symbols), say in the case of terrestrial television transmission to stationary receivers. However, in the case of objects moving near the antenna and in the case of mobile receivers, the diagram of Figure 2 evolves in time, sometimes quite quickly.

Moreover, in order to insure insensitivity to echoes, the C-OFDM system inserts a guard interval of duration $T_g = M/f_c$ between one symbol and the next. Such guard interval comprises $M$ samples unused by the receivers, in order to avoid that two contiguous symbols interfere mutually (ISI, Inter Symbol Interference). Consequently, the overall duration of a symbol, $T_s$, is the sum of the duration of the useful symbol $T_u$ and of the guard interval $T_g$. The insertion of long guard intervals allows the system to operate in presence of even highly delayed echoes (with delays of, say, a few tens or hundreds of microseconds). However, it requires that a long symbol duration $T_u$ is adopted, in order to maintain a good transmissive efficiency. Since the spacing between C-OFDM carriers is $1/T_u$, as $T_u$ increases the spacing between carriers diminishes, and the number of C-OFDM carriers increases for the same bandwidth occupied by the signal.

The elementary complex signal received, $\underline{y}(n,k)$, (after translation to the baseband and demodulation by means of FFT) is a replica of the transmitted signal, multiplied by the frequency response of the channel and added to a component of white, narrow-band Gaussian noise $\underline{n}(n,k)$. The complex signal received is therefore:

$$\underline{y}(n,k) = \underline{x}(n,k) \bullet \underline{H}(n,k) + \underline{n}(n,k) = A(n,k) \bullet H(n,k) \bullet e^{j[\Phi(n,k)+\Theta(n,k)]} + \underline{n}(n,k)$$

Coherent demodulation involves equalization of the received signal, according to the rule:

$$\underline{z}(n,k) = \underline{y}(n,k) / \hat{\underline{H}}(n,k) \ A(n,k) \bullet e^{j[\Phi(n,k)]} + \underline{v}(n,k)$$

where $\underline{v}(n,k) = \underline{n}(n,k) / \hat{\underline{H}}(n,k)$.

Such procedure requires that the receiver computes an estimate (indicated by the mark ^) of the channel frequency response $\underline{H}(n,k)$. For this purpose, it is necessary to have a reliable estimate $\hat{\underline{x}}(n,k)$ of the transmitted signal, and evaluate $\hat{\underline{H}}(n,k)$ as:

$$\hat{\underline{H}}(n,k) = \underline{y}(n,k) / \hat{\underline{x}}(n,k) \tag{1}$$

Two techniques are currently suggested for estimating the transfer function of the channel for C-OFDM signals by means of formula (1):

- one technique is based on providing the C-OFDM symbol with a "comb" of modulated pilot carriers (as shown on Figure 3, where the dark cells indicate the pilot carriers) comprising vectors $\underline{x}(n,k)$ known to the receiver;

- the other technique, known as CD3-OFDM, uses the OFDM symbol received in the previous step, after correction, re-encoding and re-modulation, to get a reliable estimate $\underline{x}(n,k)$ of the transmitted sequence, and is based, for starting the equalization process, on a known symbol which is periodically transmitted (reference symbol, dark cells on Fig. 4).

In the receiver using pilot carriers (according to Figure 3), the pilot carriers are extracted from the received signal, and an estimate $(\hat{\underline{H}}n,k)$ of the transfer function of the channel for all values $k$ corresponding to a pilot carrier is derived from them by means of formula (1) (sub-sampling of $\hat{\underline{H}}(n,k)$ in the frequency domain). By means of interpolations or filtering in the time and the frequency domains, or by means of a set of phase-locked loops (PLLs), an estimate of $\underline{H}(n,k)$ is obtained for all values of $n$ and of $k$. Sub-sampling in the time domain should be such that the channel remains quasi-stationary between two consecutive estimates; sub-sampling in the frequency domain should guarantee a number of pilot carriers of at least $N/M$, so that all echoes with delays up to $T_g$ are equalized (sampling theorem).

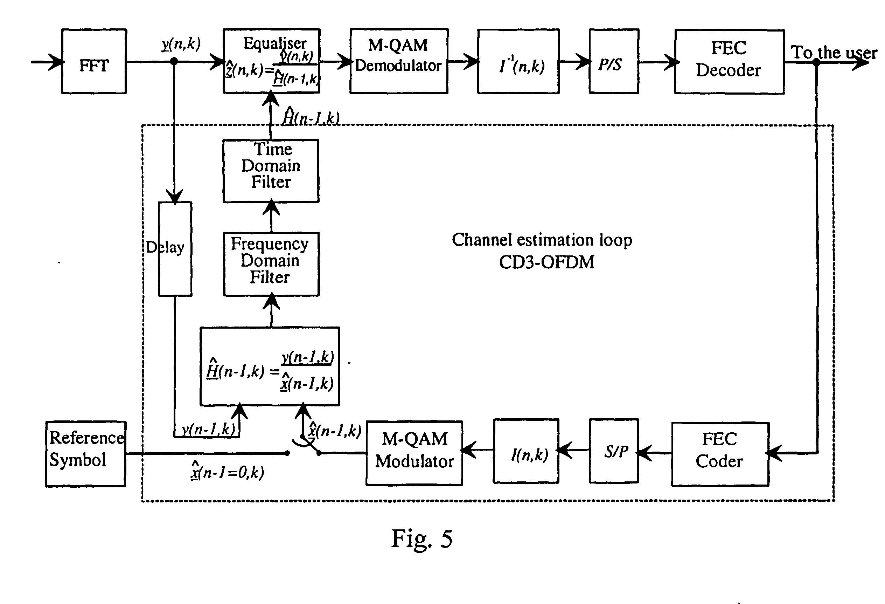

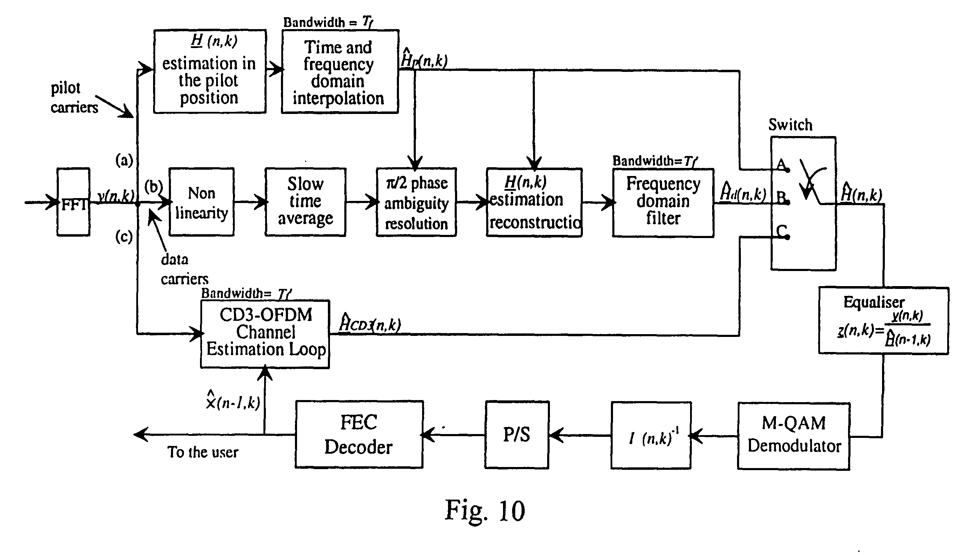

The CD3-OFDM technique yields an estimate of $\underline{H}(n,k)$ for all values of $k$, according to the following concept (Figure 5). The binary signal issued from decoder FEC (after error correction) is re-encoded, interlaced and re-modulated by modulator M-QAM, using a procedure similar to the one performed in the transmitter, so that a reliable estimate $\hat{\underline{x}}(n,k)$ of the transmitted sequence is obtained. The signal, thus reconstructed, is used to evaluate, by means of formula (1), the channel frequency response. This is then filtered in the frequency domain and the time domain to reduce the effects of noise and of wrong estimates *of* $\underline{x}(n,k)$.

Both techniques have been described in Italian Patent No. 1 281 947, filed on 5 April 1995 by the Applicant; in V. Mignone, A. Morello, *"CD3-OFDM: a novel demodulation scheme for fixed and mobile receivers",* IEEE Transactions on Communications, Vol. 44, No. 9, September 1996; and in V. Mignone, A. Morello, M. Visintin, "CD3-OFDM, *a new channel estimation method to improve the spectrum efficiency in digital terrestrial television systems",* IBC'95 Conference, Amsterdam.

In both equalization methods as described above, the channel impulse response is assumed to be limited in time to a duration equal to the guard interval $T_g$ of the C-OFDM signal; consequently, a frequency-domain filter is chosen (an interpolator, for a system using pilot carriers) having a "bandwidth" $T_f$ that is not broader than the value of the guard interval, in the former case in order to reduce aliasing due to the sub-sampling of the pilot carriers, and in both cases in order to reduce the effects of noise. It should be noted that in this case the time domain and the frequency domain are exchanged with respect to conventional filters: the channel transfer function becomes, effectively, the signal to be filtered. Moreover, the following relationship holds:

$$\mathcal{F}\{\mathcal{F}\{h(t)\}\} = \mathcal{F}\{H(f)\} = h(-t)$$

where $\mathcal{F}\{\cdot\}$ denotes the Fourier transform of the argument. Accordingly, the channel impulse response $h(t)$ represents the "spectrum" of $H(f)$, leaving aside an overturn around the ordinate axis. For simplicity, overturning of the time axis will not be shown in the following description.

Such techniques therefore allow C-OFDM signals to be equalized whenever the echoes existing in the transmission channel are received with a delay with respect to the main signal which is shorter than the guard interval. If the channel impulse response (and therefore the echo delay) has a longer duration than the guard interval, the following two phenomena take place in the received signal:

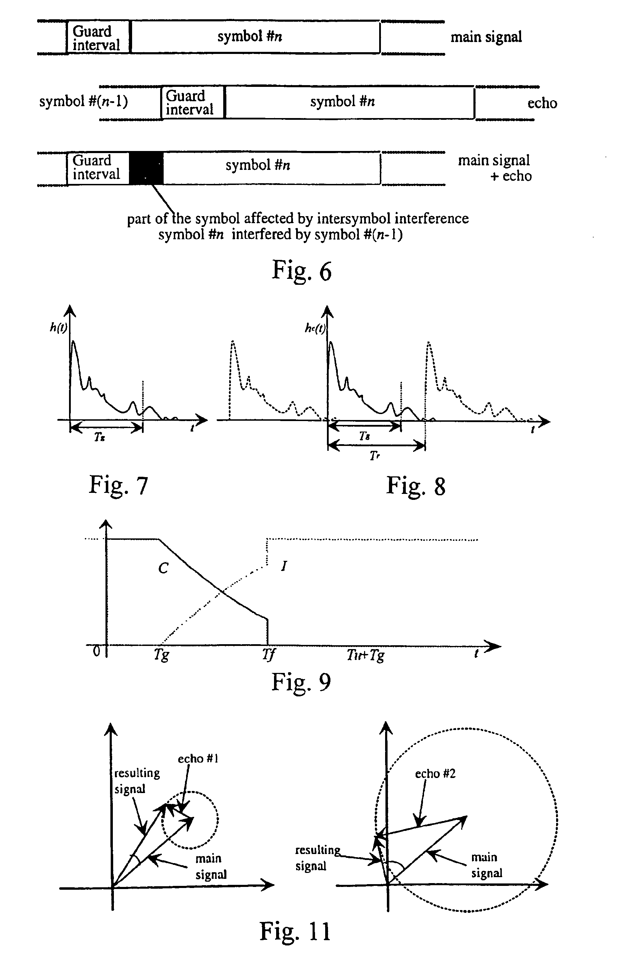

a) The "tails" of the previous symbol are not exhausted within the guard interval, and the signal is affected by inter-symbol interference, ISI (Figure 6) and by inter-carrier interference (ICI).

b) The equalization process is degraded by the imperfect estimate of the channel transfer function, and the echoes having a delay longer than the guard interval appear as real interfering signals to the receiver. Indeed, according to the prior art, under both methods an estimate of the channel frequency response is evaluated by means of filtering with a "bandwidth" $T_f$ equal to the guard interval: consequently, the effects of the echoes outside the guard interval upon the channel transfer function are badly evaluated by the filter.

Because of the above phenomena, both equalization methods make reception very critical whenever echoes outside the guard interval exist, and require that these are associated with only limited power levels with respect to the useful signal, i.e. power levels comparable to the power of noise or of uncorrelated interfering signals.

It should be noted that a norm has been recently passed in Europe which is directed to television transmission over terrestrial channels, denoted as DVB-T, and which uses pilot carriers, but is free from a reference symbol. Accordingly, the CD3-OFDM system as described above, including transmission of a reference symbol, would be excluded from application to the future digital terrestrial television.

Objects of the Invention

Accordingly, it is the main object of the method of reception of the invention to allow the equalization system CD3-OFDM to operate even where the format of the transmitted signal does not include a periodically transmitted reference symbol (Figure 4), but rather a comb of pilot carriers (Figure 3), which condition is found, for instance, in the DVB-T standard.

Brief Description of the Invention

The above and other objects and advantages, such as will appear from the following disclosure, are attained by the invention by providing a method for receiving digital signals under C-OFDM modulation, having the features recited in claim 1. The invention also provides a receiving apparatus incorporating the principles of the above method, according to claim 9.

Brief Description of the Drawings

The invention will now be described in more detail in a few preferred embodiments, given by way of non-limiting examples, and with reference to the attached drawings, wherein:

Figure 1 is a schematical representation of constellation 16-QAM;

Figure 2 is a diagram of the transfer function for a typical example of a transmission channel;

Figure 3 diagrammatically shows the structure of an OFDM symbol for the DVB-T system;

Figure 4 diagrammatically shows the structure of an OFDM symbol for the CD3-OFDM system according to the above Italian patent No. 1 281 947;

Figure 5 is a block diagram of a receiver according to the prior art (CD3-OFDM concept);

Figure 6 represents the effect of an echo having a delay with respect to the main signal that is longer than the guard interval;

Figure 7 is a diagram showing an example of an impulse response, with echoes longer than the guard interval $T_g$;

Figure 8 is a diagram similar to Figure 7, in the case of an sub-sampling of the frequency response $\underline{H}$, with a distance $1/T_r$ between the samples;

Figure 9 is a diagram showing a split of the echo power into useful power C and interfering power $I$, with respect to the echo delay $t$ and the parameters of the receiver;

Figure 10 is a block diagram of a typical embodiment of the invention to achieve lock-in of the CD3-OFDM system; and

Figure 11 is a graphical representation of the behavior of the phase for a signal that is the sum of two signals.

Disclosure of Preferred Embodiments

Figure 7 shows a typical example of a channel impulse response that is not limited to $T_g$. The estimate of the channel transfer function $H(n,k)$ (obtained by dividing the received signal by the estimate of the transmitted signal as shown by expression (1)) is sampled, and the frequency gap between the samples is equal to the distance $1/T_r = 1/(\alpha T_u)$ between the carriers known by the receiver or estimated by it ($\alpha$ = I in case of an estimate by the CD3-OFDM method, $\alpha$ = 1/3 in case of the DVB-T standard). This means that the input signal $\underline{H}$ to the frequency-domain filter (or interpolator) exhibits a spectrum having periodical replicas repeating at distances $T_r = \alpha T_u$ (Figure 8). Accordingly, it is necessary that the bandwidth $T_f$ of the frequency-domain filter is such that it imparts a strong attenuation in the neighbourhood of $T_r = \alpha T_u$, in order to avoid the "aliasing" phenomenon for the "main signal" (null delay), while, for echoes with delays longer than $T_r$, the "aliasing" phenomenon cannot be avoided. In the case that $\alpha$ = 1 (CD3-OFDM receiver), the first replica of the signal appears with a very long delay and does not place any significant restraints on the bandwidth $T_f$, however, in case that $\alpha$ = 1/3 (DVB-T norm) the filter bandwidth should be less than the theoretical limit $T_u/3$. Moreover, in order to limit the complexity of the interpolator filter, $T_f$ should be further reduced.

In order to achieve a reliable estimate of the channel impulse response even in presence of echoes beyond $T_g$, the invention consists in using a frequency-domain filter with "bandwidth" $T_f$, such that all echoes that it is desired to equalize fall within its "passband" (e.g., $T_f = 2T_g$). Obviously, it is necessary that $T_f$ is less than $T_r$, so that it allows replicas of $h_c(t)$ to be filtered.

The following expression shows how a different filter influences the splitting of the power $C_i$ of the $i$-th echo into useful power $C$ and interfering power $I$, as a function of the echo delay $t$ and of the filter bandwidth $T_f$ (Figure 9):

$$C = \sum_i w_i C_i$$

$$I = \sum_i (1 - w_i) C_i$$

$$w_i = \begin{cases} 0 & \text{if } t < 0 & \text{(echo outside the guard interval)} \\ 1 & \text{if } 0 \le t \le T_g & \text{(echo within the guard interval)} \\ \left( \dfrac{T_u - t + T_g}{T_u} \right)' & \text{if } T_g < t \le T_f & \text{(echo outside the guard interval but equalized by the filter)} \\ 0 & \text{if } t > T_f & \text{(echo outside the guard interval and not equalized by the filter)} \end{cases} \qquad (2)$$

Accordingly, echoes with a delay in the range $T_g$ to $T_f$ contribute both as useful signals and as interfering signals. With previously known equalization systems, where $T_f = T_g$, $w_i$ is a "window" function of duration $T_g$, and the power of all the echoes outside the guard interval turns out to be interfering.

Surprisingly, it turns out that by widening the bandwidth $T_f$ of the frequency-domain filter, in allowing a better estimate of the channel transfer function to be achieved, the power received with a delay longer than the guard interval $T_g$ is made partially useful, thus improving the overall performance of the system. Accordingly, the system achieves elimination of the second of the two degradation phenomena mentioned under (a) and (b).

Where the known symbol is present in the signal frame, the CD3-OFDM system as disclosed in Italian patent No. 1 281 947 mentioned above will operate in presence of echoes outside the guard interval, provided that the frequency-domain filter with "bandwidth" $T_g$ is replaced with one having a "bandwidth" equal to the longest echo that it is desired to equalize. This involves an increase of the residual noise upon the estimate of $\underline{H}(n,k)$, which increase can be compensated by installing a time-domain filter having a narrower bandwidth (for instance, for $T_f = 2T_g$, a time-domain filter may be used which averages, in each carrier, between two successive OFDM symbols). Such concept of broadening the filter bandwidth can only be applied marginally with systems using an equalization based on pilot carriers. Indeed, with reference to the example of the DVB-T standard, using sub-sampling of the pilot carriers $\alpha = 1.3$, the interpolator filter's bandwidth can be widened only from $T_g$ to a theoretical maximum of $T_u 3$, in compliance with the sampling theorem.

It can be seen from the above explanation that in the case of equalization based on pilot carriers according to the DVB-T norm, $T_r$ is small because of the sub-sampling (i.e., the spurious replicas of the estimated transfer function are quite close to one another): consequently, due to the above restraint $T_f < T_r$ on the passband of the frequency-domain filter, the practically feasible widening of the "passband" is moderate. Much wider would be the feasible bandwidth with the CD3-OFDM equalization method according to the above Italian pat. No. 1 281 947. However, in the present circumstances this method cannot be used, since it requires the presence of a reference symbol that is not contemplated in the norm as currently adopted.

In the CD3-OFDM procedure, the usefulness of the reference symbol is limited to the initial stage of the process (lock-in stage), after which equalization proceeds indefinitely, based on previous symbols, after they have been corrected, re-encoded and re-modulated. According to the invention, an improvement of the CD3-OFDM equalization method of said prior patent is provided, by which a lock-in of the CD3-OFDM procedure can be achieved even without a reference symbol, although with use of pilot carriers, as, for instance, with the DVB-T standard, even while such a sub-sampling in the frequency domain is used that makes it impossible to achieve a proper estimate of the channel transfer function in presence of echoes outside the guard interval.

If the signal frame does not contain a reference symbol, but only pilot carriers in known positions in the spectrum, the invention makes it possible to achieve lock-in of the CD3-OFDM system even in presence of echoes outside the guard interval, according to the method disclosed below. The disclosure refers to the diagram of Figure 10.

The system comprises three branches acting on the signals in reception after the FFT:

a) Fast estimate of the channel transfer function on the pilot carriers, with an interpolator filter having a "bandwidth" $T_f < \alpha T_u$. This estimate is coarse, because it is limited to echoes with a delay shorter than $T_f$.

b) Slow channel estimate on data carriers using a filter with wide "bandwidth" $T_f'$ which is capable of evaluating even the echoes outside the interval $T_f$.

c) Fast channel estimate based on CD3, using a filter with wide "bandwidth" $T_f'$.

It should be appreciated that branch (c) on Figure 10, as well as the bottom chain for equalization, M-QAM demodulation ad FEC decoding, correspond to the CD3-OFDM scheme of Figure 5.

Stage 1: fast lock-in (switch in position A):

The transfer function $\underline{H}(n,k)$ in the corresponding frequency positions is estimated in branch (a), based on the received pilot carriers, by means of formula (1), similarly to a conventional receiver based on pilot carriers. By interpolation in the time domain (or, more simply, accumulation of the pilot carriers upon four successive OFDM symbols) and in the frequency domain the estimate of the channel transfer function $\hat{\underline{H}}_p(n,k)$ is obtained and is used for equalizing the signal. The interpolation in the frequency domain should be performed by a filter having a maximum bandwidth $T_f < \alpha T_u$ (such that it guarantees suppression of the replicas of the channel impulse response). By means of an estimate of the reliability of the signal decoded by the FEC, the "quality" of $\hat{\underline{H}}p(n,k)$ is evaluated. The estimate of the "quality" of the decoded signal can be evaluated by analyzing the rate of growth of the metrics of the Viterbi algorithm in the FEC. Alternatively, the error rate on known bytes could be measured (e.g., synchronization byte in the DVB-T standard). If the quality is sufficient to allow the CD3-OFDM system to be locked in, the switch shifts to position C and processing skips to stage 3 of the procedure directly. This can be obtained if there are no echoes with significant power and with delays longer than $T_f$. Otherwise, the switch shifts to position B and processing goes on to stage 2 of the lock-in procedure.

Stage 2: slow lock-in (switch in position B):

In branch (a), computation of the coarse estimate $\hat{\underline{H}}_p(n,k)$ of the channel transfer function, which does not take into account the echoes outside $T_f$, continues on the basis of the received pilot carriers. Simultaneously, a nonlinearity and a time-domain filter (on successive OFDM symbols) is applied to each of the data carriers in order to estimate the channel transfer function, leaving aside a phase ambiguity of whole multiples of $\pi/2$ radians (due to the symmetry of the M-QAM constellations to $\pi/2$ rotations). The method used for this estimate can be any of the algorithms usually suggested for the estimate of the channel (carrier recovery) in digital, coherent-demodulation systems. For instance, the nonlinearity could be raising the received signal to the fourth power (an algorithm described in D. Efstathiou, P. Fines, A. H. Aghvami, *"Preamhle-less Non-Decision-Aided (NDA) Techniques for 16-OAM Carrier Phase Recovery and Gain Error Correction, for Burst Transmissions"*, proceedings of the GLOBECOM '93 Conference, 29 November - 2 December 1993). The time-domain filter can be implemented by an average operator over n successive OFDM symbols; in that case the estimate $\hat{\underline{H}}_a(n,k)$ will be obtained as:

$$\left| \hat{\underline{H}}_a(n,k) \right| = \sqrt[4]{\frac{\left| \sum_{q=0}^{n} \underline{v}^4(q,k) \right|}{E\left[\underline{x}^4\right]}}$$

$$\arg(\hat{\underline{H}}_a(n,k)) = \frac{\arg\left(\underline{v}^4(q,k)\right) + \pi}{4} + m\frac{\pi}{2} \qquad \forall m \in \{0,1.2.3\}$$

where $E[\cdot]$ denotes the average value.

The invention resides in the method for resolving the $m\pi/2$ phase ambiguity in the estimate $\hat{\underline{H}}_a(n,k)$.

Figure 11 graphically shows the signal resulting from the sum of a main signal and an echo, for two different echo amplitudes. The phase of the echo vector can take any value depending on the associated delay, as shown by the circumference in the drawing. It can be seen that the maximum phase difference of the resulting vector from the main signal increases as the amplitude of the echo becomes similar to the one of the main signal.

As mentioned above, the estimate algorithm based on pilot carriers in branch (a) allows the phase of the channel transfer function to be evaluated, for echoes having a delay shorter than the band $T_f$ of the frequency interpolator filter. This means that, when echoes with a delay longer than $T_f$ are present, the phase error in the estimate $\hat{\underline{H}}_p(n,k)$ will be the larger, the greater is the amplitude of such echoes. However, if such error turns out to be less than $\pi/4$ in absolute

value, then the phase information contained in $\hat{\underline{H}}_p(n,k)$ can be used to resolve the phase ambiguity in $\hat{\underline{H}}_d(n,k)$, by associating to it the phase closer to the one of $\underline{H}_p(n,k)$. From Figure 9 it can be seen that, as the echo delay increases, there is a reduction of the useful power contribution and an increase of the contribution from the interfering power associated with the echo. Even if the equalization process is assumed to be perfect, the systems under consideration can only operate correctly with $C/I$ ratios larger than a limit value $(C/I)_L$, which depends mainly on the chosen constellation and on the adopted type of FEC coding. Consequently, if the condition $C/I > (C/I)_L$ is imposed in formula (1), it follows that the equalization system should be capable of correctly operating with echoes outside the guard interval $T_g$ having an amplitude decreasing as the the associated delay increases. Therefore, if bandwidth $T_f$ of the interpolator filter in branch (a) yields a good estimate of high-power echoes within and closely outside the guard interval up to $T_f$, the method of the invention provides correct resolution of the phase ambiguity for echoes having a delay longer than $T_f$ up to $T_f'$ and a reduced amplitude, which generate phase rotations that are usually smaller than $\pi/4$ in absolute value.

Therefore, according to the invention, the estimate $\hat{\underline{H}}_d(n,k)$ of the channel transfer function is given by:

$$|\hat{\underline{H}}_d(n,k)| = |\hat{\underline{H}}_a(n,k)|$$

$$\arg(\hat{\underline{H}}_d(n,k)) = \arg(\hat{\underline{H}}_a(n,k)) \qquad \text{with } m = m_0$$

where $m_0$ is the value of m such that the phase difference $[\arg(\hat{\underline{H}}_a(n,k)) - \arg(\hat{\underline{H}}p(n,k))]$ is at a minimum (resolution of the $\pi/2$ phase ambiguity).

Subsequently, the channel estimate as derived from the data carriers is integrated with the estimate evaluated from the pilot carriers, and the result is filtered in the frequency domain using a "wide" filter having "bandwidth" $T_f'$. It should be noted that, in the hardware implementation, the frequency-domain filters in branches (a), (b) e (c) could be a single physical filter, where the coefficients and the bandwidth are changed depending on the stage ((a), (b), o (c)) of the algorithm.

A second method for resolving the phase ambiguity is based on the following consideration. The phase jumps between successive samples of the transfer function $\underline{H}(n,k)$ depend on the amplitude of the echo and on its delay (Figure 11). The shorter is the echo delay, the smaller is the phase variation from one frequency sample to the next in $\underline{H}(n,k)$; the smaller the echo amplitude, the smaller is the phase variation from one frequency sample to the next in $\underline{H}(n,k)$. Therefore, since an estimate of the transfer function $\underline{H}(n,k)$ is available to the receiver for values $k$ corresponding to the pilot carriers (after filtering in the time domain), such estimate can be used to resolve the phase ambiguity ($m\pi/2$) of the transfer function corresponding to the data carriers. The invention provides for associating $\hat{\underline{H}}_d(n,k)$ with the phase closest to the phase of the pilot carrier that is adjacent in the frequency domain. This algorithm is sub-optimal with respect to the previous one, because powerful echoes, even inside the guard interval, could give rise to large phase jumps from one carrier to the next, and, consequently, to a wrong resolution of the phase ambiguity.

Variations in the above described methods of resolving the phase ambiguity ($m\pi/2$) may be made, which will in each case be based on phase information from the pilot carriers and from the adjacent data carriers for which the phase ambiguity has been previously resolved, all within the scope of the invention. For instance, another approach could be to search for the minimum phase difference with respect to a data carrier of adjacent frequency, for which the phase ambiguity has already been resolved in the same way, or with another of the above described methods.

In stage 2 (switch in position B), the quality of $\hat{\underline{H}}_d(n,k)$ is again evaluated by estimating the reliability of the signal as decoded by the FEC, until such quality becomes sufficient to insure convergence of the CD3-OFDM algorithm. Alternatively, a fixed lock-in time could be identified (the number of OFDM symbols over which the time average should be computed), on the basis of a laboratory test using a variety of echo patterns. At this point, the switch is shifted to position C and processing proceeds to stage 3.

Stage 3, channel estimate by the CD3-OFDM method (switch in position C):

This stage coincides with the end of the lock-in stage in the estimator of $\underline{H}(n,k)$, when the CD3-OFDM equalization algorithm can operate correctly with a filter that has been widened to bandwidth $T_f'$. This stage continues for the remaining duration of the reception, until, for any reason, the loop should become unlocked.

The result of the estimate of $\underline{H}(n,k)$ in stage 2, with either of the methods suggested for resolving the phase ambiguity, is all the more accurate as the number of averaged symbols $Q$ is larger, usually a few tens; this, of course, involves a slowdown in tracking the channel transfer function, although, in the preferred embodiment of the receiver (Fig. 10), this only happens in the start-up stage of the receiver. Indeed, the CD3-OFDM channel estimate procedure, once triggered, is able to perform the estimate symbol by symbol, and to quickly track all changes in the channel characteristics.

Stage 2 of the method according to the invention may also continue for the entire duration of the reception, without using the CD3-OFDM channel estimate algorithm, and therefore without a transition to stage 3. In that case, the slow time-domain filter in branch (b) drastically slows down the ability of the system to track changes in the propagation channel (e.g., due to Doppler effect) for the entire duration of the reception. Accordingly, though applying the invention to the equalization system based on the CD3-OFDM system requires a quasi-stationary channel only for a brief lock-in interval, using the invention with the equalization system based on the pilot carriers alone does not provide a sufficient adjustment speed in presence of channel variations and echoes outside the guard interval.

### Claims

1. A method for receiving digital signals over a channel as a sequence of C-OFDM multicarrier symbols ($x(n,k)$) each being preceded by a guard interval and of the type including pilot carriers and being free from reference symbols, the method comprising the steps of:

   - demodulating the received signals by reconstructing its elementary components ($y((n,k)$),
   - equalizing said elementary components ($y(n,k)$) by dividing them by corresponding values of an estimated channel transfer function ($\hat{H}(n-1, k)$) being derived from a previously received symbol ($y(n-1,k)$) by dividing its elementary components by the estimates ($\hat{x}(n-1,k)$) of the respective transmitted symbol ($x(n-1,k)$) as reconstructed in the receiver after equalization, FEC correction, re-encoding and remapping, and filtering the resulting quotients in the time domain and in the frequency domain with a first equivalent bandwidth that is greater than the duration of the guard interval,

   the method being **characterized by** the steps of:

   - obtaining an initial estimate ($\hat{H}_p(n,k)$) of the channel transfer function in a first stage by extracting the pilot carriers from the signal, deriving the channel impulse response for each pilot carrier by interpolating in the time domain using successive symbols and in the frequency domain by filtering with a second equivalent bandwidth ($T_f$) not greater than the duration of the repetition interval ($T_r \ominus \alpha T_u$) of the channel impulse response due to the sub-sampling in the frequency domain,
   - obtaining the estimate of the channel transfer function in a second stage by filtering said quotients in the frequency domain with the first equivalent bandwidth ($T_f'$) equal to the maximum delay of the echoes that are desired to equalize, and
   - switching from the first stage to the second stage depending on the reliability of the initial estimate of the transfer function.

2. Method for receiving digital signals according to claim 1, wherein the received, demodulated and equalized signal is decoded by FEC decoding, **characterized in that** the reliability of said initial estimate of the channel transfer function ($\underline{\hat{H}}_p(n,k)$) is evaluated by analyzing the rate of growth of the metrics in a Viterbi algorithm of the decoding.

3. Method for receiving digital signals according to claim 1, **characterized in that** the reliability of said initial estimate of the channel transfer function ($\underline{\hat{H}}_p(n,k)$) is evaluated by measuring the error rate in predetermined known bytes that are contained in the transmitted signal.

4. Method for receiving digital signals according to claim 2 or 3, **characterized in that**, if during said first stage the reliability of the initial estimate of the channel transfer function ($\underline{\hat{H}}_p(n,k)$) is worse than a predetermined value, before switching to the second stage, switching to a third stage, wherein a nonlinearity and a time-domain filter are applied to the data carriers in a parallel processing in order to improve the estimate of the channel transfer function, with a phase ambiguity of multiples of $\pi/2$ radians, and the ambiguity is resolved by assuming as a valid phase the one for which the phase difference from the initial estimate of the channel transfer function ($\underline{\hat{H}}_p(n,k)$) is a minimum.

5. Method for receiving digital signals according to claim 2 or 3, **characterized in that**, if during said first stage the reliability of the initial estimate of the channel transfer function ($\underline{\hat{H}}_p(n,k)$) is worse than a predetermined value, before switching to the second stage, switching to a third stage, wherein a nonlinearity and a time-domain filter are applied to the data carriers in a parallel processing in order to improve the estimate of the channel transfer function, with a phase ambiguity of multiples of π/2 radians, and the ambiguity is resolved by assuming as a valid phase the one whose difference from the phase of the pilot carrier that is closer in frequency is a minimum.

6.  Method for receiving digital signals according to claim 2 or 3, **characterized in that**, if during said first stage the reliability of the initial estimate of the channel transfer function ($\hat{\underline{H}}_p(n,k)$) is worse than a predetermined value, before switching to the second stage, switching to a third stage, wherein a nonlinearity and a time-domain filter are applied to the data carriers in a parallel processing in order to improve the estimate of channel transfer function, with a phase ambiguity of multiples of π/2 radians, and the ambiguity is resolved by assuming as a valid phase the one having minimum difference from the phase of a pilot carrier or data carrier, which is adjacent in frequency, of which the phase ambiguity has already been resolved.

7.  Method for receiving digital signals according to claim 4 or 5 or 6, **characterized in that** said non-linearity is a raising of the received signal to the fourth power.

8.  Method for receiving digital signals according to claim 4, 5, 6 or 7, **characterized in that** the time-domain filtering is stopped after a predetermined number of OFDM symbols and said second stage is started.

9.  Apparatus for receiving digital signals over a channel as a sequence of C-OFDM multicarrier symbols (x(n,k)) each being preceded by a guard interval and of the type including pilot carriers and being free from reference symbols, said apparatus comprising

    - demodulating means for demodulating the received signals by reconstructing its elementary components (y(n,k)),
    - equalizing means for equalizing said elementary components (y(n,k)) by dividing them by corresponding values of an estimated channel transfer function being $\hat{H}(n-1,k)$ derived from a previously received symbol (y(n-1,k)) by dividing its elementary components by the estimates ($\hat{x}(n-1,k)$) of the respective transmitted symbol (x(n-1,k)) as reconstructed in the receiver after equalization, FEC correction, re-encoding and remapping, and filtering means for filtering the resulting quotients in the time domain and in the frequency domain with a first equivalent bandwidth that is greater than the duration of the guard interval,

    the apparatus being **characterized in that** it further comprises

    - first means for obtaining an initial estimate ($\hat{H}_p(n,k)$) of the channel transfer function by extracting the pilot carrier frequencies from the signal, deriving the channel impulse response for each pilot carrier by interpolating in the time domain using successive symbols and in the frequency-domain by filtering with a second equivalent bandwidth ($T_f$) not greater than the duration of the repetition interval ($T_r = \alpha T_u$) of the channel impulse response due to the sub-sampling in the frequency domain;
    - second means for obtaining the estimate ($\hat{H}(n,k)$) of the channel transfer function by filtering said quotients in the frequency domain with the first equivalent bandwidth ($T_f'$) equal to the maximum delay of the echoes that are desired to equalize, and
    - switching means for switching the operation of the apparatus from said first means to said second means depending on the reliability of the initial estimate of the transfer function.

10. Apparatus for receiving digital signals according to claim 9, **characterized in that** it further comprises third means for applying a non-linearity and a time-domain filtering to the data carriers in order to improve the estimate of channel transfer function, with a phase ambiguity of multiples of π/2 radians, and means for resolving the phase ambiguity by assuming as a valid phase the one for which the phase difference from the initial estimate of the channel transfer function ($\hat{\underline{H}}_p(n,k)$) is a minimum, and **in that** said switching means, if the reliability of the initial estimate of the channel transfer function ($\hat{\underline{H}}_p(n,k)$) in said first means turns out to be worse than a predetermined value, switch the operation of the apparatus from the first to the third means before switching to the second means.

11. Apparatus for receiving digital signals according to claim 9, **characterized in that** it further comprises third means for applying a non-linearity and a time-domain filtering to the data carriers in order to improve the estimate of the channel transfer function ($\hat{H}(n,k)$), with a phase ambiguity of multiples of π/2 radians, and means for resolving the phase ambiguity by assuming as a valid phase the one for which the phase difference from the phase of the pilot carrier closest in frequency is a minimum, and **in that** said switching means, if said reliability of the initial estimate of the channel transfer function ($\hat{\underline{H}}_p(n,k)$) in said first means is worse than a predetermined value, switch the operation of the apparatus from the first to the third means before switching to the second means.

12. Apparatus for receiving digital signals according to claim 9, **characterized in that** it further comprises third means for applying a non-linearity and a time-domain filtering to the data carriers in order to improve the estimate of the channel transfer function ($\hat{H}(n,k)$), with a phase ambiguity of multiples of $\pi/2$ radians, and means for resolving the phase ambiguity by assuming as a valid phase the one having minimum difference from the phase of pilot carrier or a data carrier, which is adjacent in frequency, of which the phase ambiguity has already been resolved, and **in that** said switching means, if said reliability of the initial estimate of the channel transfer function ($\hat{\underline{H}}_p(n,k)$) in said first means is worse than a predetermined value, switch the operation of the apparatus from the first to the third means before switching to the second means.

13. Apparatus for receiving digital signals according to any of claims 10, 11 or 12, **characterized in that** said means for applying a nonlinearity are means for raising the received signal to the fourth power.

14. Apparatus for receiving digital signals according to any of claims 10 to 13, **characterized in that** said switching means is adapted to switch from said third means to said second means after reception of a predetermined number of OFDM symbols.


**Patentansprüche**

1. Verfahren zum Empfangen digitaler Signale als eine Sequenz von Mehrträgersymbolen (x(n,k)) vom C-OFDM-Typ über einen Kanal, denen jeweils ein Schutzintervall vorausgeht und die Pilotträger ohne Referenzsymbole enthalten, mit den Schritten:

   - Demodulieren der empfangenen Signale durch Rekonstruieren ihrer elementaren Komponenten (y(n,k)),
   - Entzerren der elementaren Komponenten (y(n,k)), indem diese durch entsprechender Werte einer abgeschätzten Kanaltransferfunktion ($\hat{H}$ (n-1, k)) geteilt werden, die von einem zuvor empfangenen Symbol (y(n-1, k)) abgeleitet wird, indem ihre elementaren Komponenten durch die Schätzungen ($\hat{x}$ (n-1,k)) des jeweiligen übertragenen Symbols (x(n-1,k)) geteilt werden, wie sie in dem Empfänger nach einer Entzerrung, FEC-Korrektur, einer Neukodierung und einer Neuabbildung rekonstruiert werden, und Filtern der resultierenden Quotienten in der Zeitdomäne und in der Frequenzdomäne mit einer ersten äquivalenten Bandbreite, die größer als die Zeitdauer des Schutzintervalls ist,

   **gekennzeichnet durch** die Schritte:

   - Erhalten einer Anfangsschätzung ($\hat{H}_p(n,k)$) der Kanaltransferfunktion in einer ersten Stufe, indem die Pilotträger aus dem Signal extrahiert werden und die Kanalimpulsantwort für jeden Pilotträger abgeleitet wird **durch** Interpolation aufeinanderfolgender Symbole in der Zeitdomäne und **durch** Filtern in der Frequenzdomäne mit einer zweiten äquivalenten Bandbreite ($T_f$), die nicht größer als die Zeitdauer des Wiederholungsintervalls ($T_r = \alpha T_u$) der Kanalimpulsantwort ist aufgrund eines Sub-Sampelns in der Frequenzdomäne,
   - Erhalten der Schätzung der Kanaltransferfunktion in einer zweiten Stufe, indem die Quotienten in der Frequenzdomäne mit der äquivalenten Bandbreite ($T_f'$) gefiltert werden, die gleich der maximalen Verzögerung der Echos ist, die man entzerren möchte, und
   - Umschalten von der ersten Stufe auf die zweite Stufe in Abhängigkeit der Zuverlässigkeit der Anfangsschätzung der Transferfunktion.

2. Verfahren zum Empfangen digitaler Signale nach Anspruch 1, bei dem das empfangene, demodulierte und entzerrte Signal durch FEC-Dekodieren dekodiert wird, **dadurch gekennzeichnet, dass** die Zuverlässigkeit der Anfangsschätzung der Kanaltransferfunktion ($\hat{H}_p(n,k)$) ausgewertet wird, indem die Wachstumsrate der Metriken im Viterbi-Algorithmus der Dekodierung analysiert wird.

3. Verfahren zum Empfangen digitaler Signale nach Anspruch 1, **dadurch gekennzeichnet, dass** die Zuverlässigkeit der Anfangsschätzung der Kanaltransferfunktion ($\hat{\underline{H}}_p(n,k)$) ausgewertet wird, indem die Fehlerrate in vorbestimmten bekannten Bytes gemessen wird, die in dem übertragenen Signal enthalten sind.

4. Verfahren zum Empfangen digitaler Signale nach Anspruch 2 oder 3, **dadurch gekennzeichnet, dass**, falls während der ersten Stufe die Zuverlässigkeit der Anfangsschätzung der Kanaltransferfunktion ($\hat{\underline{H}}_p(n,k)$) schlechter als ein vorbestimmter Wert ist, vor dem Umschalten auf die zweite Stufe auf eine dritte Stufe umgeschaltet wird, in der eine Nichtlinearität und ein Zeitdomänenfilter auf die Datenträger in einer parallelen Verarbeitung angewandt werden, um die Schätzung der Kanaltransferfunktion mit einer Phasenmehrdeutigkeit von Vielfachen von π/2 Radiant zu verbessern, und die Mehrdeutigkeit aufgelöst wird, indem als eine gültige Phase diejenige angenommen wird, für die die Phasendifferenz zu der Anfangsschätzung der Kanaltransferfunktion ($\hat{\underline{H}}_p$(n, k)) ein Minimum ist.

**5.** Verfahren zum Empfangen digitaler Signale nach Anspruch 2 oder 3, **dadurch gekennzeichnet, dass**, falls während der ersten Stufe die Zuverlässigkeit der Anfangsschätzung der Kanaltransferfunktion ($\hat{\underline{H}}_p$(n,k)) schlechter als ein vorbestimmter Wert ist, vor dem Umschalten auf die zweite Stufe auf eine dritte Stufe umgeschaltet wird, bei der eine Nichtlinearität und ein Zeitdomänenfilter auf die Datenträger in einer parallelen Verarbeitung angewandt werden, um die Schätzung der Kanaltransferfunktion mit einer Phasenmehrdeutigkeit von Vielfachen von π/2 Radiant zu verbessern, und die Mehrdeutigkeit aufgelöst wird, indem als eine gültige Phase diejenige angenommen wird, deren Differenz zu der Phase des Pilotträgers, der frequenzmäßig näher liegt, ein Minimum ist.

**6.** Verfahren zum Empfangen digitaler Signale nach Anspruch 2 oder 3, **dadurch gekennzeichnet, dass**, falls während der ersten Stufe die Zuverlässigkeit der Anfangsschätzung der Kanaltransferfunktion ($\hat{\underline{H}}_p$(n, k)) schlechter als ein vorbestimmter Wert ist, vor dem Umschalten auf die zweite Stufe auf eine dritte Stufe umgeschaltet wird, bei der eine Nichtlinearität und ein Zeitdomänenfilter auf die Datenträger in einer parallelen Verarbeitung angewandt werden, um die Schätzung der Kanaltransferfunktion mit einer Phasenmehrdeutigkeit von Vielfachen von π/2 Radiant zu verbessern, und die Mehrdeutigkeit aufgelöst wird, indem als eine gültige Phase diejenige angenommen wird, die eine minimale Differenz zu der Phase eines Pilotträgers oder Datenträgers besitzt, der frequenzmäßig benachbart ist und dessen Phasenmehrdeutigkeit bereits aufgelöst worden ist.

**7.** Verfahren zum Empfangen digitaler Signale nach Anspruch 4 oder 5 oder 6, **dadurch gekennzeichnet, dass** die Nichtlinearität in einer Erhöhung des empfangenen Signals bis zur vierten Potenz besteht.

**8.** Verfahren zum Empfangen digitaler Signale nach Anspruch 4, 5, 6 oder 7, **dadurch gekennzeichnet, dass** die Zeitdomänenfilterung nach einer vorbestimmten Anzahl von OFDM-Symbolen beendet und die zweite Stufe gestartet wird.

**9.** Gerät zum Empfangen digitaler Signale als eine Sequenz von Mehrträgersymbolen (x(n, k)) vom C-OFDM-Typ über einen Kanal, denen jeweils ein Schutzintervall vorausgeht und die Pilotträger und keine Referenzsymbole umfassen, mit:

- einem Demodulationsmittel zum Demodulieren der empfangenen Signale, indem ihre elementaren Komponenten (y(n, k)) rekonstruiert werden,
- einem Entzerrungsmittel zum Entzerren der elementaren Komponenten (y(n, k)), indem diese durch entsprechende Werte einer abgeschätzten Kanaltransferfunktion ($\hat{H}$(n-1, k) geteilt werden, die von einem zuvor empfangenen Symbol (y(n-1, k)) abgeleitet wird, indem ihre elementaren Komponenten durch die Schätzungen (x(n-1, k)) des jeweiligen übertragenen Symbols (x(n-1, k)) geteilt werden, wie es in dem Empfänger nach der Entzerrung, der FEC-Korrektur, der Neukodierung und der Neuabbildung rekonstruiert wird, und einem Filtermittel zum Filtern der resultierenden Quotienten in der Zeitdomäne und in der Frequenzdomäne mit einer ersten äquivalenten Bandbreite, die größer als die Zeitdauer des Schutzintervalls ist,

wobei das Gerät **dadurch gekennzeichnet ist, dass** es ferner aufweist:

- ein erstes Mittel zum Erhalten einer Anfangsschätzung ($\hat{H}_p$(n, k)) der Kanaltransferfunktion, indem die Pilotträgerfrequenzen aus dem Signal extrahiert werden und die Kanalimpulsantwort für jeden Pilotträger abgeleitet wird, indem aufeinanderfolgende Symbole in der Zeitdomäne interpoliert und in der Frequenzdomäne mit einer zweiten äquivalenten Bandbreite ($T_f$) gefiltert werden, die nicht größer als die Zeitdauer des Wiederholungsintervalls ($T_r = \alpha T_u$) der Kanalimpulsantwort aufgrund des Subsamplens in der Frequenzdomäne ist;
- ein zweites Mittel zum Erhalten der Schätzung ($\hat{H}$(n, k)) der Kanaltransferfunktion, indem die Quotienten in der Frequenzdomäne mit der äquivalenten Bandbreite ($T_f'$) gefiltert werden, die gleich der maximalen Verzögerung der Echos ist, die man entzerren möchte, und
- ein Umschaltmittel zum Umschalten des Betriebs des Geräts von dem ersten Mittel auf das zweite Mittel in Abhängigkeit von der Zuverlässigkeit der Anfangsschätzung der Transferfunktion.

**10.** Gerät zum Empfangen digitaler Signale nach Anspruch 9, **dadurch gekennzeichnet, dass** es ferner ein drittes Mittel zum Anwenden einer Nichtlinearität und einer Zeitdomänenfilterung auf die Datenträger, um die Schätzung der Kanaltransferfunktion mit einer Phasenmehrdeutigkeit von Vielfachen von π/2 Radiant zu verbessern, und ein Mittel aufweist zum Auflösen der Phasenmehrdeutigkeit, indem als eine gültige Phase diejenige angenommen wird, für die die Phasendifferenz zu der Anfangsschätzung der Kanaltransferfunktion ($\hat{\underline{H}}_p$(n, k)) ein Minimum ist, und **dadurch**, dass das Umschaltmittel, falls die Zuverlässigkeit der Anfangsschätzung der Kanaltransferfunktion ($\hat{\underline{H}}_p$ (n, k)) in dem ersten Mittel sich schlechter als ein vorbestimmter Wert erweist, den Betrieb des Geräts von dem ersten auf das dritte Mittel umschaltet, bevor auf das zweite Mittel umgeschaltet wird.

11. Gerät zum Empfangen digitaler Signale nach Anspruch 9, **dadurch gekennzeichnet, dass** es ferner ein drittes Mittel zum Anwenden einer Nichtlinearität und einer Zeitdomänenfilterung auf die Datenträger, um die Schätzung der Kanaltransferfunktion ($\hat{\underline{H}}$(n, k)) mit einer Phasenmehrdeutigkeit von Vielfachen von π/2 Radiant zu verbessern, und ein Mittel aufweist zum Auflösen der Phasenmehrdeutigkeit, indem als eine gültige Phase diejenige angenommen wird, für die die Phasendifferenz zu der Phase des frequenzmäßig nächstgelegenen Pilotträgers ein Minimum ist, und **dadurch**, dass das Umschaltmittel, falls die Zuverlässigkeit der Anfangsschätzung der Kanaltransferfunktion ($\hat{\underline{H}}_p$(n, k)) in dem ersten Mittel schlechter als ein vorbestimmter Wert ist, den Betrieb des Geräts von dem ersten auf das dritte Mittel umschaltet, bevor auf das zweite Mittel umgeschaltet wird.

12. Gerät zum Empfangen digitaler Signale nach Anspruch 9, **dadurch gekennzeichnet, dass** es ferner ein drittes Mittel zum Anwenden einer Nichtlinearität und einer Zeitdomänenfilterung auf die Datenträger aufweist, um die Schätzung der Kanaltransferfunktion ($\hat{\underline{H}}$(n, k)) mit einer Phasenmehrdeutigkeit von Vielfachen von π/2 Radiant zu verbessern, und ein Mittel aufweist zum Auflösen der Phasenmehrdeutigkeit, indem als eine gültige Phase diejenige angenommen wird, die eine minimale Differenz zu der Phase eines Pilotträgers oder eines Datenträgers besitzt, der frequenzmäßig benachbart ist und dessen Phasenmehrdeutigkeit bereits aufgelöst worden ist, und **dadurch**, dass das Umschaltmittel, falls die Zuverlässigkeit der Anfangsschätzung der Kanaltransferfunktion ($\hat{\underline{H}}_p$(n, k)) in dem ersten Mittel schlechter als ein vorbestimmter Wert ist, den Betrieb des Geräts von dem ersten auf das dritte Mittel umschaltet, bevor auf das zweite Mittel umgeschaltet wird.

13. Gerät zum Empfangen digitaler Signale nach einem der Ansprüche 10, 11 oder 12, **dadurch gekennzeichnet, dass** das Mittel zum Anwenden einer Nichtlinearität Mittel sind zum Erhöhen des empfangenen Signals bis zur vierten Potenz.

14. Gerät zum Empfangen digitaler Signale nach einem der Ansprüche 10 bis 13, **dadurch gekennzeichnet, dass** das Umschaltmittel derart ausgebildet ist, dass es nach dem Empfang einer vorbestimmten Anzahl von OFDM-Symbolen von dem dritten Mittel auf das zweite Mittel umschaltet.

**Revendications**

1. Procédé de réception des signaux numériques sur un canal sous la forme d'une séquence de symboles de porteuses multiples C-OFDM (x(n,k)) qui sont précédés chacun par un intervalle de garde et qui sont du type comprenant des porteuses pilotes et exempt de symboles de référence, le procédé comprenant les étapes consistant à :

    - démoduler les signaux reçus en reconstruisant leurs composantes élémentaires (y(n,k)),
    - égaliser lesdites composantes élémentaires (y(n,k)) en les divisant par des valeurs correspondantes d'une fonction de transfert de canal estimée $\hat{H}$ (n-1) qui est dérivée d'un symbole précédemment reçu (y(n-1,k)) en divisant ses composantes élémentaires par les estimations ($\hat{x}$ (n-1,k)) du symbole transmis respectif (x(n-1,k)) tel qu'il est reconstitué dans le récepteur après égalisation, correction FEC, re-codage et re-conversion, et en filtrant les quotients ainsi obtenus dans le domaine temporel et dans le domaine fréquentiel avec une première largeur de bande équivalente qui est plus grande que la durée de l'intervalle de garde ;

le procédé étant **caractérisé par** les étapes consistant à :

    - obtenir une estimation initiale ($\hat{H}_p$(n,k)) de la fonction de transfert de canal dans un premier stade en extrayant les fréquences de porteuse pilote du signal, en dérivant la réponse impulsionnelle de la voie pour chaque fréquence de porteuse pilote par interpolation dans le domaine temporel en utilisant des symboles successifs et dans le domaine fréquentiel par filtrage avec une seconde largeur de bande équivalente (Tf) ne dépassant pas la durée de l'intervalle de répétition (Tr = αTu) de la réponse impulsionnelle de la voie en raison du sous-échantillonnage dans le domaine fréquentiel ;
    - obtenir l'estimation de la fonction de transfert de canal dans un deuxième stade en filtrant lesdits quotients dans le domaine fréquentiel avec la première largeur de bande équivalente (Tf) qui est égale au retard maximum des échos qu'il est souhaitable d'égaliser ; et

- permuter du premier stade au deuxième stade en fonction de la fiabilité de l'estimation initiale de la fonction de transfert.

2. Procédé de réception de signaux numériques selon la revendication 1, dans lequel le signal reçu, démodulé et égalisé est décodé par décodage FEC, **caractérisé en ce que** la fiabilité de ladite estimation initiale de la fonction de transfert de canal ($\hat{H}_p(n,k)$) est évaluée en analysant le taux de croissance de la mesure dans un algorithme de décodage de Viterbi.

3. Procédé de réception de signaux numériques selon la revendication 1, **caractérisé en ce que** la fiabilité de ladite estimation initiale de la fonction de transfert de canal ($\hat{H}_p(n,k)$) est évaluée en mesurant le taux d'erreur dans des octets connus prédéterminés qui sont contenus dans le signal transmis.

4. Procédé de réception de signaux numériques selon la revendication 2 ou 3, **caractérisé en ce que**, si pendant ledit premier stade la fiabilité de l'estimation initiale de la fonction de transfert de canal ($H_p(n,k)$) est pire qu'une valeur prédéterminée, avant de permuter au deuxième stade, permuter à un troisième stade dans lequel une non linéarité et un filtre dans le domaine temporel sont appliqués sur les fréquences de porteuse de données dans un traitement parallèle de façon à améliorer l'estimation de la fonction de transfert de canal, avec une ambiguïté de phase de multiples de $\pi/2$ radians, et l'ambiguïté est résolue en supposant comme une phase valide celle pour laquelle la différence de phase par rapport à l'estimation initiale de la fonction de transfert de canal ($\hat{H}p(n,k)$) est un minimum.

5. Procédé de réception de signaux numériques selon la revendication 2 ou 3, **caractérisé en ce que**, si pendant ledit premier stade la fiabilité de l'estimation initiale de la fonction de transfert de canal ($H_p(n,k)$) est pire qu'une valeur prédéterminée, avant de permuter au deuxième stade, permuter à un troisième stade dans lequel une non linéarité et un filtre dans le domaine temporel sont appliqués sur les fréquences de porteuse de données dans un traitement parallèle de façon à améliorer l'estimation de la fonction de transfert de canal, avec une ambiguïté de phase de multiples de $\pi/2$ radians, et l'ambiguïté est résolue en supposant comme une phase valide celle dont la différence de phase par rapport à la phase de la porteuse pilote qui est la plus proche en fréquence est un minimum.

6. Procédé de réception de signaux numériques selon la revendication 2 ou 3, **caractérisé en ce que**, si pendant ledit premier stade la fiabilité de l'estimation initiale de la fonction de transfert de canal ($\hat{H}_p(n,k)$) est pire qu'une valeur prédéterminée, avant de permuter au deuxième stade, permuter à un troisième stade dans lequel une non linéarité et un filtre dans le domaine temporel sont appliqués sur les fréquences de porteuse de données dans un traitement parallèle de façon à améliorer l'estimation de la fonction de transfert de canal, avec une ambiguïté de phase de multiples de $\pi/2$ radians, et l'ambiguïté est résolue en supposant comme une phase valide celle qui a une différence minimum par rapport à la phase d'une porteuse pilote ou de porteuse de données, qui est adjacente en fréquence, dont l'ambiguïté de phase a déjà été résolue.

7. Procédé de réception de signaux numériques selon la revendication 4, 5 ou 6, **caractérisé en ce que** ladite non linéarité est une élévation du signal reçu à la puissance quatre.

8. Procédé de réception de signaux numériques selon la revendication 4, 5, 6 ou 7, **caractérisé en ce que** le filtrage dans le domaine temporel est arrêté au bout d'un nombre prédéterminé de symboles OFDM et ledit deuxième stade est débuté.

9. Appareil de réception des signaux numériques sur un canal sous la forme d'une séquence de symboles de porteuses multiples C-OFDM ($x(n,k)$) qui sont précédés chacun par un intervalle de garde et qui sont du type comprenant des porteuses pilotes et exempt de symboles de référence, ledit appareil comprenant :

des moyens de démodulation pour démoduler les signaux reçus en reconstruisant leurs composantes élémentaires ($y(n,k)$) ;

- des moyens d'égalisation pour égaliser lesdites composantes élémentaires ($y(n,k)$) en les divisant par des valeurs correspondantes d'une fonction de transfert de canal estimée ($\hat{H}(n-1)$) qui est dérivée d'un symbole précédemment reçu ($y(n-1,k)$) en divisant ses composantes élémentaires par les estimations ($\hat{x}(n-1,k)$) du symbole transmis respectif ($x(n-1,k)$) tel qu'il est reconstitué dans le récepteur après égalisation, correction FEC, re-codage et re-conversion, et en filtrant les quotients ainsi obtenus dans le domaine temporel et dans le domaine fréquentiel avec une première largeur de bande équivalente qui est plus grande que la durée de l'intervalle de garde,

l'appareil étant **caractérisé en ce qu'**il comprend en outre :

- des premiers moyens pour obtenir une estimation initiale ($\hat{H}_p(n,k)$) de la fonction de transfert de canal en extrayant les fréquences de porteuse pilote du signal, en dérivant la réponse impulsionnelle du canal pour chaque fréquence de porteuse pilote par interpolation dans le domaine temporel en utilisant des symboles successifs et dans le domaine fréquentiel par filtrage avec une seconde largeur de bande équivalente (Tf) ne dépassant pas la durée de l'intervalle de répétition (Tr = $\alpha$Tu) de la réponse impulsionnelle du canal en raison du sous-échantillonnage dans le domaine fréquentiel ;
- des deuxièmes moyens pour obtenir l'estimation ($\hat{H}(n,k)$) de la fonction de transfert de canal en filtrant lesdits quotients dans le domaine fréquentiel avec la première largeur de bande équivalente (Tf) qui est égale au retard maximum des échos qu'il est souhaitable d'égaliser : et
- des moyens de permutation pour permuter le fonctionnement de l'appareil desdits premiers moyens aux dits deuxièmes moyens en fonction de la fiabilité de l'estimation initiale de la fonction de transfert.

10. Appareil de réception de signaux numériques selon la revendication 9, **caractérisé en ce qu'**il comprend en outre des troisièmes moyens pour appliquer une non linéarité et un filtrage dans le domaine temporel sur les fréquences de porteuse de données de façon à améliorer l'estimation de la fonction de transfert de canal, avec une ambiguïté de phase de multiples de $\pi/2$ radians, et des moyens pour résoudre l'ambiguïté de phase en supposant comme une phase valide celle pour laquelle la différence de phase par rapport à l'estimation initiale de la fonction de transfert de canal ($H_p(n,k)$) est un minimum, et **en ce que** lesdits moyens de permutation, si la fiabilité de l'estimation initiale de la fonction de transfert de canal ($\hat{H}_p(n,k)$) dans lesdits premiers moyens s'avère pire qu'une valeur prédéterminée, permutent le fonctionnement de l'appareil des premiers aux troisièmes moyens avant de permuter aux deuxièmes moyens.

11. Appareil de réception de signaux numériques selon la revendication 9, **caractérisé en ce qu'**il comprend en outre des troisièmes moyens pour appliquer une non linéarité et un filtrage dans le domaine temporel sur les fréquences de porteuse de données de façon à améliorer l'estimation de la fonction de transfert de canal ($\hat{H}(n,k)$), avec une ambiguïté de phase de multiples de $\pi/2$ radians, et des moyens pour résoudre l'ambiguïté de phase en supposant comme une phase valide celle pour laquelle la différence de phase par rapport à la porteuse pilote la plus proche en fréquence est un minimum, et **en ce que** lesdits moyens de pennutation, si ladite fiabilité de l'estimation initiale de la fonction de transfert de canal ($H_p(n,k)$) dans lesdits premiers moyens est pire qu'une valeur prédéterminée, permutent le fonctionnement de l'appareil des premiers aux troisièmes moyens avant de permuter aux deuxièmes moyens.

12. Appareil de réception de signaux numériques selon la revendication 9, **caractérisé en ce qu'**il comprend en outre des troisièmes moyens pour appliquer une non linéarité et un filtrage dans le domaine temporel sur les fréquences de porteuse de données de façon à améliorer l'estimation de la fonction de transfert de canal ($\hat{H}(n,k)$), avec une ambiguïté de phase multiples de $\pi/2$ radians, et des moyens pour résoudre l'ambiguïté de phase en supposant comme une phase valide celle qui a une différence minimum par rapport à la phase d'une porteuse pilote ou d'une porteuse de données, qui est adjacente en fréquence, dont l'ambiguïté de phase a déjà été résolue, et **en ce que** lesdits moyens de permutation, si ladite fiabilité de l'estimation initiale de la fonction de transfert de canal ($\hat{H}_p(n,k)$) dans lesdits premiers moyens est pire qu'une valeur prédéterminée, permutent le fonctionnement de l'appareil des premiers aux troisièmes moyens avant de permuter aux deuxièmes moyens.

13. Appareil de réception de signaux numériques selon l'une quelconque des revendications 10, 11 ou 12, **caractérisé en ce que** lesdits moyens pour appliquer une non linéarité sont des moyens pour élever le signal reçu à la puissance quatre.

14. Appareil de réception de signaux numériques selon l'une quelconque des revendications 10 à 13, **caractérisé en ce que** lesdits moyens de permutation sont adaptés pour permuter desdits troisièmes moyens auxdits deuxièmes moyens après réception d'un nombre prédéterminé de symboles OFDM.

Fig. 1

Fig. 2

Fig. 3

Fig. 4

FFT

$y(n,k)$

Equaliser
$$\hat{x}(n,k)=\frac{y(n,k)}{\hat{H}(n-1,k)}$$

M-QAM Demodulator

$I^{-1}(n,k)$

P/S

FEC Decoder

To the user

$\hat{H}(n-1,k)$

Time Domain Filter

Delay

Frequency Domain Filter

Channel estimation loop
CD3-OFDM

$$\hat{H}(n-1,k) =\frac{y(n-1,k)}{\hat{x}(n-1,k)}$$

Reference Symbol

$y(n-1,k)$

$\hat{x}(n-1,k)$

$\hat{x}(n-1=0,k)$

M-QAM Modulator

$I(n,k)$

S/P

FEC Coder

Fig. 5

EP 0 838 928 B1

Fig. 10

| Guard interval | symbol #n | | main signal |

symbol #(n-1) | Guard interval | symbol #n | echo

| Guard interval | | symbol #n | | main signal + echo |

part of the symbol affected by intersymbol interference
symbol #n  interfered by symbol #(n-1)

## Fig. 6

$h(t)$

$T_s$

$t$

## Fig. 7

$h_c(t)$

$T_s$

$T_r$

$t$

## Fig. 8

$C$  $I$

$0$  $Tg$  $Tf$  $T_{tr}+Tg$  $t$

## Fig. 9

resulting signal
echo #1
main signal

echo #2
resulting signal
main signal

## Fig. 11